(19) Europäisches Patentamt
European Patent Office
Office européen des brevets

(11) **EP 2 388 617 B1**

(12) **FASCICULE DE BREVET EUROPEEN**

(45) Date de publication et mention
de la délivrance du brevet:
**10.08.2016 Bulletin 2016/32**

(51) Int Cl.:
***G01S 13/90*** *(2006.01)*

(21) Numéro de dépôt: **11165845.6**

(22) Date de dépôt: **12.05.2011**

(54) **Procédé de construction d'images radar focalisées**

Verfahren zur Erstellung von fokussierten Radarbildern

Method for constructing focussed radar images

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2010 FR 1002083**

(43) Date de publication de la demande:
**23.11.2011 Bulletin 2011/47**

(73) Titulaire: **Thales**
**92200 Neuilly Sur Seine (FR)**

(72) Inventeurs:
• **Bosser, Luc**
**78120 Rambouillet (FR)**
• **Broussolle, Joan**
**I-21100 Varese (IT)**
• **Lafaix, M. Julien**
**78150 Le Chesnay (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
EP-A1- 2 180 338       FR-A1- 2 924 513
US-A1- 2007 247 461    US-B1- 6 255 981
US-B1- 7 391 357

• A. W. DOERRY: "Autofocus correction of SAR images exhibiting excessive residual migration", RADAR SENSOR TECHNOLOGY IX, PROCEEDINGS OF SPIE, vol. 5788, 2005, XP040203936,

**Description**

La présente invention concerne un procédé de construction d'images radar focalisées, notamment des images obtenues par ouverture synthétique, cette technique étant souvent désignée par l'acronyme anglo-saxon SAR pour « Synthetic Aperture Radar ». L'invention s'applique notamment à la production d'images SAR de haute résolution à partir d'un aéronef équipé d'une antenne radar.

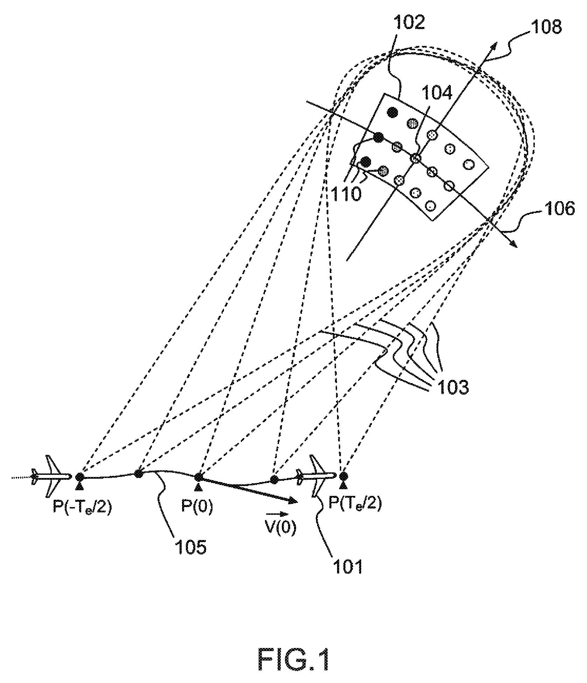

Pour rappel, la figure 1 illustre une phase d'acquisition de données par un porteur mobile en mode SAR « Spot », c'est à dire un mode dans lequel le faisceau antennaire est asservi en permanence sur la zone à imager. Un radar fixé sur un aéronef 101 illumine une zone imagée 102 durant une durée d'éclairement $T_e$ en asservissant le faisceau antennaire 103 sur le centre 104 de ladite zone 102 tout au long de la trajectoire 105 de l'aéronef 101. Cette durée $T_e$ est inversement proportionnelle à la résolution visée suivant l'axe transverse 106, la résolution suivant l'axe radial 108 étant quant à elle, inversement proportionnelle à la bande émise par l'antenne radar. La zone imagée 102 est maillée par un quadrillage 110 de cellules pour chacune desquelles on cherche à associer au moins un niveau de réflectivité.

Les détections du radar permettent de créer une image suivant l'axe radial 108 et l'axe transverse 106, respectivement désignés par la suite par les termes d'axe « Distance » 108 et d'axe « Doppler » 106. Cette image, qualifiée par la suite d'image « Distance-Doppler », délivre pour chaque cellule M située à l'intérieur de la zone imagée 102, une valeur de distance $D_M$ et une valeur de fréquence Doppler $f_M$, ces deux valeurs $D_M$ et $f_M$ étant référencées par rapport à un instant donné $t_{ref}$ correspondant, par exemple, à l'écoulement de la moitié de la durée totale de l'éclairement.

En décrivant un secteur angulaire donné autour de la zone imagée 102, le radar collecte périodiquement une série de N profils en distance avec une fréquence de récurrence $f_r$ égale à $N/T_e$. Chacun des N profils en distance offre une représentation mono dimensionnelle de la zone imagée 102 suivant l'axe distance 108. En outre, l'axe distance 108 est divisé en plusieurs cases, chacune desdites cases ayant de préférence une taille légèrement inférieure à la résolution en distance. Pour une case distance donnée, une analyse spectrale suivant l'axe transverse 106 effectuée sur le signal collecté permet de discriminer en Doppler les différents échos contenus à l'intérieur de cette case. Cette analyse spectrale permet de discriminer les échos avec la résolution souhaitée si certaines conditions sont respectées. Pour respecter ces conditions, des algorithmes de focalisation appliquent des corrections sur le signal collecté pour chacun des réflecteurs de la zone imagée 102, ces corrections comprenant :

- d'une part, une correction de migration en distance, pour compenser la variation de distance entre le réflecteur et le centre de phase de l'antenne au cours de l'éclairement ;
- d'autre part, une correction de migration en Doppler, pour compenser le terme non linéaire de phase du signal dû aux variations de la vitesse de rapprochement radar-réflecteur, de manière à conserver un signal de fréquence fixe.

L'emploi des algorithmes classiques de focalisation impose de connaître très précisément la trajectoire du centre de phase de l'antenne radar au cours de l'acquisition des signaux, a fortiori lorsque la résolution d'image souhaitée est fine, le temps d'éclairement requis de la zone imagée étant alors long, ce temps d'éclairement pouvant, par exemple, dépasser une minute. Or, lorsque l'antenne radar est fixée sur un porteur mobile tel qu'un avion, particulièrement sensible aux perturbations atmosphériques, cette trajectoire ne peut généralement pas être connue avec suffisamment de précision, surtout lorsque le radar ne possède pas de système inertiel propre. Aussi, des algorithmes, dits d'autofocus, corrigent les défauts résiduels de focalisation en exploitant l'information contenue dans le signal radar lui-même, sans utiliser uniquement les informations extérieures de mesure de trajectoire.

Pour résumer, classiquement, la génération d'une image SAR focalisée se déroule en trois étapes. Dans un premier temps, une image en pleine résolution est générée par un algorithme de formation d'image connu : il subsiste alors une défocalisation résiduelle du fait des imprécisions de mesure de la trajectoire du centre de phase de l'antenne, autrement dit, du fait des imprécisions de mesure de la trajectoire du porteur. Dans un deuxième temps, cette défocalisation résiduelle est estimée par une technique d'autofocus appliquée à l'image « pleine résolution » calculée précédemment. Dans un troisième temps, l'image générée à la première étape est re-focalisée en utilisant la défocalisation résiduelle précédemment estimée. Cette approche comporte plusieurs inconvénients.

D'une part, elle dissocie totalement la première étape des étapes suivantes. Or, la première étape concerne la formation d'une image en pleine résolution dont la qualité de focalisation dépend de la qualité de mesure de la trajectoire du centre de phase de l'antenne, mesure généralement effectuée par un capteur externe au radar, tandis que les étapes suivantes s'attachent à effectuer des traitements d'autofocalisation exploitant l'image en pleine résolution précédemment formée. Ainsi, lorsque les temps d'éclairement deviennent très longs, les erreurs de mesure sur la trajectoire du porteur provoquent une détérioration de la qualité de focalisation telle, qu'à l'issue de la première étape, la défocalisation résiduelle devient impossible à estimer correctement au cours de la deuxième étape.

D'autre part, cette approche oblige à attendre la fin de l'acquisition des signaux radar avant de commencer à former l'image puisque la première étape vise la formation d'emblée d'une image de résolution la plus fine possible en exploitant l'intégralité de l'acquisition. Or, il est parfois utile de disposer d'images grossièrement résolues d'une zone donnée avant que le temps d'éclairement de ladite zone soit entièrement écoulé. De même, dans un souci d'optimisation de l'utilisation des outils de traitement des signaux radar, il peut être avantageux d'effectuer des calculs en temps réel, sans attendre l'achèvement de l'éclairement complet de la zone. Les procédés de construction d'image SAR actuellement employés ne permettent pas de répondre simplement à ces besoins.

Enfin, les images SAR sont polluées de manière inhérente par un bruit multiplicatif qui peut nuire à la lisibilité de l'image. Une méthode efficace pour résoudre ce problème est de construire plusieurs images en tournant autour de la zone imagée pour sommer ces images en puissance après les avoir superposées proprement, de sorte que l'écart type du bruit soit réduit. Cependant, les procédés connus d'imagerie SAR n'intègrent généralement pas naturellement cette méthode lors de la génération de l'image.

Le brevet américain publié sous le numéro US6255981 propose des méthodes pour recaler les images obtenues par imagerie par radar à synthèse d'ouverture inverse, mais ne permet pas d'améliorer les techniques de défocalisation.

Un but de l'invention est de proposer une solution aux problèmes précités en intégrant les étapes d'autofocalisation au coeur du procédé de génération d'une image radar, laquelle génération pouvant en outre être effectuée au fur et à mesure que les données sont collectées par le radar. A cet effet, l'invention a pour objet un procédé de construction d'images radar focalisées comprenant au moins les étapes suivantes :

- découper la période d'éclairement du radar en p sous-périodes, deux sous-périodes successives se chevauchant temporellement ;
- choisir $n_0$ sous-périodes successives parmi les p sous-périodes, et pour chacune de ces $n_0$ sous-périodes, effectuer des acquisitions radar pour générer une image $IM\_0_x$ de résolution $R_0$ ;
- appliquer un traitement d'autofocus sur chacune des $n_0$ images $IM\_0_x$ générées ;
- combiner les $n_0$ images traitées par autofocus afin de générer au moins une nouvelle image radar $IM\_1_x$ focalisée, le procédé étant caractérisé en ce que les étapes de combinaison des images (204) et d'autofocus (203) sont répétées itérativement pour obtenir une image de résolution souhaitée $R_{fin}$,
- $n_0$ images focalisées étant générées à l'issue d'un traitement d'autofocus, le procédé comporte une phase itérative comprenant au moins les étapes suivantes :

  - initialiser des variables $n_i$ et $R_i$ comme suit : $n_i=n_0$ et $R_i=R_1$ ;
  - tant que la résolution $R_i$ est plus grossière que la résolution $R_{fin}$ souhaitée :

    o répartir les $n_i$ images de résolution $R_i$ générées précédemment, dans $n_{i+1}$ ensembles, chacun desdits ensembles contenant au moins deux images, les images se succédant temporellement ;
    o pour chacun des $n_{i+1}$ ensembles d'images de résolution $R_i$ :

    - combiner les images de l'ensemble pour générer une nouvelle image de résolution plus fine $R_{i+1}$ ;
    - appliquer un traitement d'autofocus sur la nouvelle image de résolution plus fine $R_{i+1}$ ;

    o mettre à jour les variables $n_i$ et $R_i$, $n_{i+1}$ devient $n_i$ et $R_{i+1}$ devient $R_i$.

La résolution de l'image obtenue dépend de la durée d'éclairement couverte par l'ensemble des $n_0$ sous-périodes choisies, plus cette durée étant longue, plus la résolution de l'image résultante étant fine. Ce procédé permet d'obtenir une image de haute résolution en diminuant les erreurs de focalisation habituellement présentes lorsque le temps d'éclairement du radar est long. En outre, on peut disposer d'une image sous-résolue $R_i$ avant d'avoir atteint la résolution souhaitée $R_{fin}$.

Chaque itération de l'étape de combinaison des images peut comprendre une étape de choix entre une combinaison cohérente et une étape de combinaison non cohérente.

Selon un mode de mise en oeuvre du procédé selon l'invention, l'étape de combinaison cohérente des images comprend au moins les sous-étapes suivantes :

- recaler temporellement les images entre-elles ;
- modifier les images recalées pour les rendre superposables ;
- rabouter les signaux temporels correspondant à chacune des images superposables pour générer un nouveau signal,
- appliquer une transformée de Fourier selon l'axe temporel sur ledit nouveau signal pour générer au moins une image de résolution $R_1$ plus fine que $R_0$.

Pour les durées d'éclairement considérées et les classes d'erreur considérées sur la mesure de la trajectoire du centre de phase de l'antenne, l'erreur commise sur le recalage temporel se traduit d'une image à l'autre par un décalage résiduel uniforme sur l'ensemble des points de la zone imagée.

Selon un mode de mise en oeuvre du procédé selon l'invention, une image de référence $IM_{ref}$ est choisie parmi les $n_0$ images à combiner, et l'étape de recalage temporel des images entre-elles comprend au moins les sous-étapes suivantes :

  o pour chacune des $n_0$-1 images $IM_x$ autres que l'image $IM_{ref}$ :

    ▪ recaler en position les points réflecteurs de l'image $IM_x$ par rapport aux points réflecteurs de l'image de référence $IM_{ref}$ ;
    ▪ recaler en phase l'image $IM_x$ par rapport à $IM_{ref}$.

L'étape de recalage temporel permet de référencer toutes les images par rapport à une référence de temps commune. Cette étape exploite la mesure de trajectoire du centre de phase de l'antenne au cours du temps. L'imprécision sur cette mesure se traduit par un décalage résiduel commun à l'ensemble des points de la zone imagée. Ce décalage résiduel uniforme est ensuite corrigé pour rendre les images superposables. De préférence, l'image de référence IMref choisie est l'image issue d'une sous-période centrale parmi les n0 sous-périodes.

Selon un mode de mise en oeuvre du procédé selon l'invention, une image de référence $IM_{ref}$ est choisie parmi les $n_0$ images à combiner, l'étape de modification des images recalées pour les rendre superposables comprenant au moins les sous-étapes suivantes :

  o pour chacune des $n_0$-1 images $IM_x$ autres que l'image $IM_{ref}$ :

    ▪ estimer le décalage résiduel de $IM_x$ par rapport à $IM_{ref}$ estimant la position du pic de corrélation entre ces deux images $IM_{ref}$ et $IM_x$ ;
    ▪ corriger l'image $IM_x$ en y appliquant le décalage opposé de celui estimé à l'étape précédente.

Selon un mode de mise en oeuvre du procédé selon l'invention, une même zone géographique est éclairée par le radar pendant toute la durée de l'éclairement et les $n_0$ sous-périodes de découpage temporel se chevauchent sensiblement de moitié, les ensembles étant choisis pour comprendre trois images de résolution $R_i$, la résolution $R_{i+1}$ de l'image générée à partir desdites trois images étant sensiblement deux fois plus fine que la résolution $R_i$.

Selon un mode de mise en oeuvre du procédé selon l'invention, les traitements de combinaison sont parallélisés, des images de résolution $R_a$, regroupées dans un premier ensemble, étant combinées parallèlement à la combinaison d'images de résolution $R_b$, $R_b$ étant plus fine que $R_a$, regroupées dans un second ensemble, les images du premier ensemble étant issues d'acquisitions radar effectuées sur une période disjointe des acquisitions radar effectuées pour produire les images du second ensemble. La parallelisation des traitements permet d'obtenir une image au plus tôt, et d'optimiser l'utilisation des ressources.

Selon un mode de mise en oeuvre du procédé selon l'invention, l'étape de combinaison non cohérente comprend au moins les étapes suivantes :

    ▪ recaler temporellement les images entre-elles;
    ▪ modifier les images recalées pour les rendre superposables;
    ▪ mettre en conformité les images superposables dans un repère commun ;
    ▪ sommer les images conformes pour les moyenner en puissance.

D'autres caractéristiques apparaîtront à la lecture de la description détaillée donnée à titre d'exemple et non limitative qui suit faite en regard de dessins annexés qui représentent :

-    la figure 1, une illustration d'une phase d'acquisition de données par un porteur mobile (art antérieur) ;
-    la figure 2, un synoptique présentant les étapes principales d'un procédé de construction d'image SAR selon l'invention,
-    la figure 2a, un synoptique présentant les étapes d'un premier procédé de construction d'image SAR selon l'invention,
-    la figure 2b, un synoptique présentant les étapes d'un deuxième procédé de construction d'image SAR selon l'invention,
-    la figure 2c, un synoptique présentant les étapes d'un troisième procédé de construction d'image SAR selon l'invention,
-    la figure 3, un schéma illustrant le procédé de construction d'image SAR de la figure 2c ;
-    la figure 4, un synoptique précisant les étapes à exécuter pour la combinaison cohérente des images dans un procédé de construction d'image SAR selon l'invention ;

- la figure 5, un exemple de trois images à combiner par un procédé de construction d'image SAR selon l'invention ;
- la figure 6, les trois images de la figure 5 modifiées à l'issue de l'exécution d'une étape de recalage en position dans un procédé de construction d'image SAR selon l'invention ;
- les figures 7a, 7b et 7c, une illustration de l'étape de recalage en phase effectuée lors d'une combinaison cohérente des images dans un procédé de construction d'image SAR selon l'invention ;
- la figure 8, les trois images de la figure 6 à l'issue de l'exécution d'une étape de superposition des images dans un procédé de construction d'image SAR selon l'invention ;
- la figure 9, une illustration d'une étape de raboutage des images de la figure 8 dans un procédé de construction d'image SAR selon l'invention ;
- la figure 10, l'image résultante, à l'issue d'une combinaison cohérente des trois images de la figure 5 dans un procédé de construction d'image SAR selon l'invention ;
- la figure 11, un synoptique précisant les étapes à exécuter pour la combinaison non cohérente des images dans un procédé de construction d'image SAR selon l'invention.

Dans un souci de clarté, les mêmes références dans des figures différentes désignent les mêmes éléments.

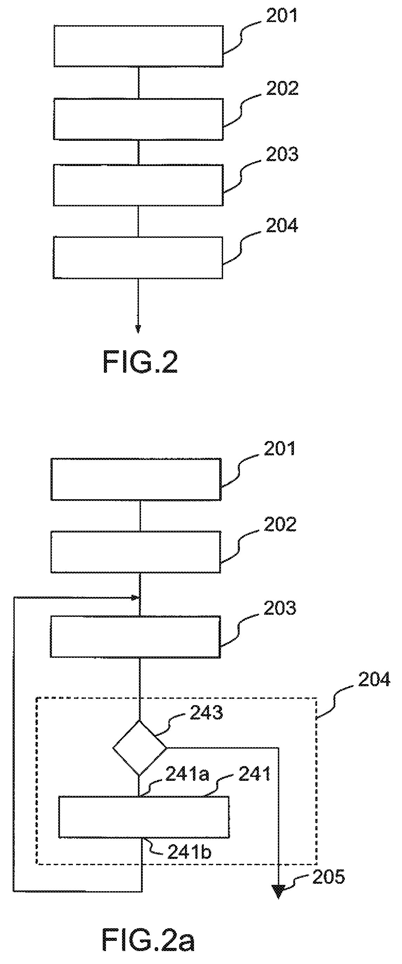

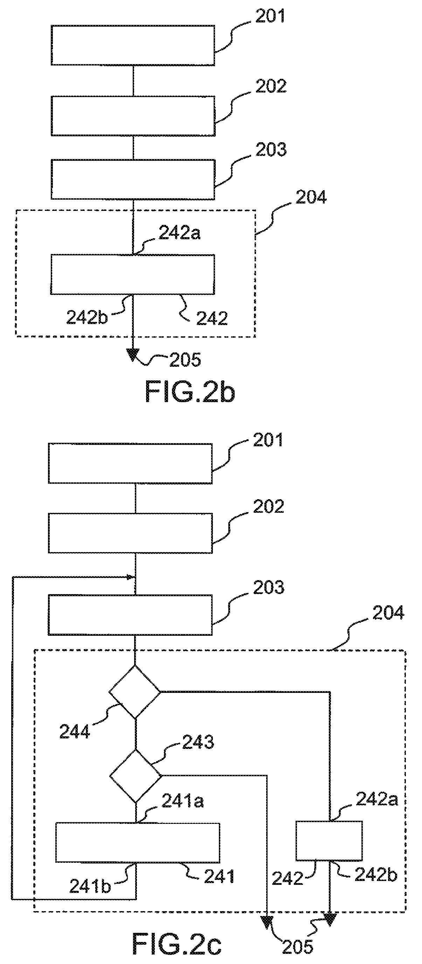

La figure 2 est un synoptique présentant les étapes principales d'un procédé de construction d'image SAR selon l'invention.

Dans un premier temps 201, la période d'éclairement complet $T_e$ est découpée en p sous-périodes notées $P_x$, x variant de 1 à p, deux sous-périodes successives $P_x$ et $P_{x+1}$ se chevauchant partiellement dans le temps.

Dans un deuxième temps 202, pour chaque sous-période $P_x$, une image Distance-Doppler $IM\_0_x$ est générée, l'image $IM\_0_x$ comportant les caractéristiques suivantes :

- $IM\_0_x$ est référencée temporellement par rapport au centre $t_x$ de la sous-période $P_x$ ;
- le point central de cette image correspond au point de la zone visée par le faisceau antennaire à l'instant $t_x$ (dans le cas d'un mode radar Spot, ce point est identique tout au long de l'éclairement $T_e$) ;
- la résolution transverse $R_0$ de l'image $IM\_0_x$ correspond à une durée d'éclairement $T_e/k$ inférieure à la durée $T_e$ de l'éclairement complet, sa résolution $R_0$ est donc généralement plus grossière que la résolution $R_{fin}$ finale visée ;
- la résolution radiale de l'image $IM\_0_x$ ne dépend pas de la qualité de mesure de la trajectoire du centre de phase de l'antenne au cours de l'éclairement ; par conséquent, cette résolution radiale peut être d'emblée aussi fine que possible.

Dans un troisième temps 203, pour chaque image $IM\_0_x$, des algorithmes classiques d'autofocus sont appliquées pour corriger les défauts de focalisation de l'image $IM\_0_x$. Pour que les algorithmes d'autofocus employés permettent d'obtenir une bonne qualité de focalisation de l'image $IM\_0_x$, la durée $T_e/k$ d'une sous-période $P_x$ d'éclairement est choisie suffisamment courte : quelques secondes au maximum, tandis que l'éclairement total peut couvrir plusieurs dizaines de secondes, de sorte que les imprécisions de mesure de trajectoire du centre de phase de l'antenne soient minimes et que les erreurs de focalisation soient totalement réversibles ou quasiment.

Dans un quatrième temps 204, les images $IM\_0_x$ sont combinées, soit pour obtenir une ou plusieurs images de résolution plus fine que $R_0$, soit pour obtenir une image dont la couverture spatiale est agrandie ou dont le bruit radiométrique est réduit, soit encore pour obtenir une ou plusieurs images comportant plusieurs de ces améliorations. Deux méthodes pour combiner les images sont détaillées par la suite.

La figure 2a est un synoptique présentant les étapes d'un premier procédé de construction d'image SAR selon l'invention, dans lequel une première méthode de combinaison des images est employée. Les premières étapes 201, 202, 203, respectivement, de découpage de la période d'éclairement 201, de génération 202 des images $IM\_0_x$, puis d'autofocus 203, sont identiques à celles décrites en figure 2.

A l'issue de l'étape d'autofocus 203, un test 243 est exécuté pour déterminer si la finesse de résolution transverse $R_0$ des images $IM\_0_x$ est supérieure ou égale à la finesse de résolution souhaitée $R_{fin}$. Si la finesse de résolution des images est insuffisante en regard de la résolution attendue $R_{fin}$, une étape de combinaison 241 est exécutée pour affiner la résolution. Au cours de cette étape 241, plusieurs images $IM\_0_x$ issues de sous-périodes d'éclairement se chevauchant temporellement sont combinées dans le but de produire une ou plusieurs nouvelles images $IM\_1_x$ dont la résolution $R_1$ est affinée suivant l'axe transverse. Cette méthode de combinaison est qualifié par la suite de « combinaison cohérente ».

A l'issue de cette étape de combinaison cohérente 241, le procédé retourne à l'étape 203 de correction des défauts de focalisation des images en fournissant à l'algorithme d'autofocus les images affinées $IM\_1_x$.

Après N itérations de l'étape de combinaison cohérente 241, lorsque le test 243 indique que la résolution $R_N$ des images obtenues $IM\_N_x$ lors de la dernière itération de combinaisons est suffisante en regard de la résolution $R_{fin}$ visée (ou qu'une seule image $IM\_N_1$ a été produite lors de cette dernière itération, ce qui, naturellement, rend impossible toute combinaison supplémentaire), alors la ou les images $IM\_N_x$ sont transmises en sortie 205.

La figure 2b est un synoptique présentant les étapes d'un deuxième procédé de construction d'image SAR selon l'invention, dans lequel une seconde méthode de combinaison des images est employée. Les premières étapes 201, 202, 203, respectivement, de découpage de la période d'éclairement 201, de génération 202 des images IM_0$_x$, puis d'autofocus 203, sont identiques à celles décrites en figure 2.

La seconde méthode pour combiner les images IM_0$_x$ est une combinaison dite « non cohérente ». Cette méthode ne permet pas d'affiner la résolution ; elle vise à améliorer la radiométrie de l'image et/ou d'agrandir la taille de la zone imagée. Selon cette méthode, n sous-périodes d'éclairement P$_x$, n≤p, sont utilisées pour former l'ensemble de la zone imagée.

A l'issue de l'étape d'autofocus 203, une étape 242 de combinaison non cohérente des images est exécutée pour produire une ou plusieurs images à faible bruit radiométrique et/ou à couverture élargie ; la ou les images produites sont transmises en sortie 205.

La figure 2c est un synoptique présentant les étapes d'un troisième procédé de construction d'image SAR selon l'invention, dans lequel la première et la deuxième méthode de combinaison des images sont employées. Les premières étapes 201, 202, 203, respectivement, de découpage de la période d'éclairement 201, de génération 202 des images IM_0$_x$, puis d'autofocus 203, sont identiques à celles décrites en figure 2.

A l'issue de l'étape d'autofocus 203, un premier test 244 est effectué pour décider si une combinaison non cohérente doit être effectuée sur les images IM_0$_x$. Si une telle combinaison est décidée, alors une étape 242 de combinaison non cohérente est exécutée et la ou les images produites sont transmises en sortie 205. Sinon, un test 243 est exécuté pour déterminer si la résolution R$_0$ des images IM_0$_x$ est suffisante en regard de la résolution souhaitée R$_{fin}$. Si la résolution R$_0$ s'avère suffisamment fine, les images IM_0$_x$ sont transmises en sortie 205. Sinon, de manière analogue au procédé de la figure 2a, des étapes 241 de combinaison cohérente sont alors exécutées itérativement N fois, jusqu'à ce que la résolution R$_N$ soit suffisante ou qu'une seule image ait été produite à l'issue de la dernière combinaison. Cependant, contrairement au procédé de la figure 2b, après chaque itération, le premier test 244 est effectué pour déterminer si une combinaison non cohérente des images doit être effectuée.

Ainsi, grâce au procédé de la figure 2c, il est possible de produire des images répondant à un compromis entre, d'une part, leur finesse de résolution et d'autre part, leur bruit radiométrique et/ou leur couverture spatiale.

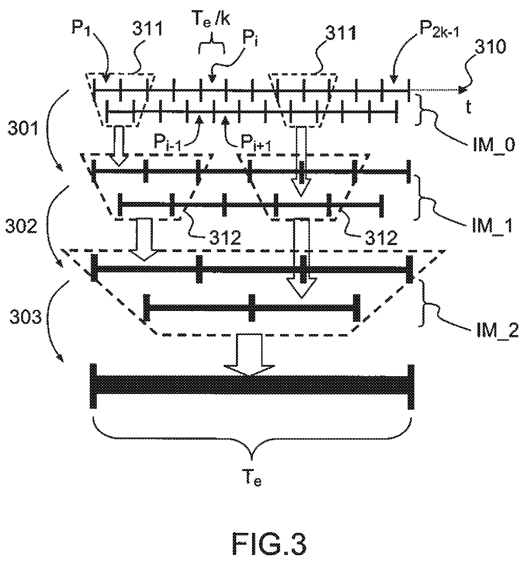

La figure 3, un schéma illustrant le procédé de construction d'image SAR de la figure 2c.

Au cours de la première étape 201 du procédé (figure 2c), l'axe temporel 310 est tronçonné de sorte que la période d'éclairement complet T$_e$ soit découpée en 2k-1 sous-périodes P$_x$, x variant de 1 à 2k-1. Dans l'exemple, deux sous-périodes successives P$_x$ et P$_{x+1}$ se chevauchent de moitié et toutes les sous-périodes P$_x$ ont la même durée T$_e$/k. Selon une autre mise en oeuvre du procédé selon l'invention, les sous-périodes d'éclairement P$_x$ n'ont pas toutes la même durée et/ou les durées de chevauchement entre deux sous-périodes successives P$_x$ et P$_{x+1}$ varient.

Ensuite, pour chaque sous-période P$_x$, une image IM_0$_x$ de résolution transverse R$_0$ est formée (deuxième étape 202, figure 2c), l'image IM_0$_x$ étant ensuite corrigée des défauts de focalisation (troisième étape 203, figure 2c). Puis, à l'issue des trois étapes précédentes 201, 202, 203, une ou plusieurs combinaisons d'images 204 sont effectuées. Dans l'exemple de la figure 3, deux étapes de combinaison cohérente 301, 302 (référence 241 en figure 2c) puis une étape de combinaison non cohérente 303 (référence 242 en figure 2c) sont exécutées.

Au cours de la première étape de combinaison cohérente 301 de l'exemple, des ensembles 311 de trois images sont choisis et les images desdits ensembles 311 sont combinées, chacune des 2k-1 images IM_0$_x$, issue d'une sous-période d'éclairement P$_x$, étant combinée au moins une fois. Ainsi, dans l'exemple, les images des ensembles 311 suivants sont combinées : {IM_0$_1$, IM_0$_2$, IM_0$_3$}, {IM_0$_3$, IM_0$_4$, IM_0$_5$} ... {IM_0$_{i-1}$, IM_0$_i$, IM_0$_{i+1}$}, {IM_0$_{i+1}$, IM_0$_{j+2}$, IM_0$_{i+3}$} ... {IM_0$_{2k-3}$, IM_0$_{2k-2}$, IM_0$_{2k-1}$}. Dans l'exemple, comme les sous-périodes P$_x$ se chevauchent de moitié, lorsque toutes les images IM_0$_i$ ont été combinées, k-1 nouvelles images IM_1$_x$ Distance-Doppler sont générées, chacune étant associée à une durée d'éclairement 2.T$_e$/k doublée par rapport à la durée d'éclairement des images initiales IM_0$_x$. Ces nouvelles images IM_1$_x$ ont donc une résolution transverse R$_1$ sensiblement deux fois plus fine que R$_0$.

Ensuite, dans l'exemple de la figure 3, une deuxième étape 302 de combinaison cohérente est réitérée en combinant les images IM_1$_x$ de résolution transverse R$_1$ deux fois plus fine que R$_0$. Les images IM_1$_x$ sont regroupées dans (k-1)/2 ensembles 312 puis, les images appartenant à chacun de ces ensembles 312 sont combinées. Les (k-1)/2 images obtenues IM_2$_x$ ont alors une résolution R$_2$ sensiblement quadruplée par rapport à celle des images initiales IM_0$_x$.

Enfin, l'étape 303 de combinaison non cohérente combine toutes les images IM_2$_x$ pour former une image IM$_{finale}$ associée à la période d'éclairement complète T$_e$. Cette dernière image IM$_{finale}$ a une résolution égale à R$_2$ et bénéficie d'une réduction de son bruit radiométrique et/ou d'une couverture élargie.

Par ailleurs, pour obtenir des images radar exploitables au plus tôt et/ou dans un souci d'optimisation de l'utilisation des ressources de traitement utilisées pour exécuter les étapes 301, 302 de combinaison cohérente, certains traitements peuvent être effectués en parallèle. Aussi, les étapes du procédé présenté en figure 2 ne sont pas nécessairement exécutées de manière purement séquentielle. En effet, en reprenant l'exemple de la figure 3, une fois qu'au moins trois images IM_0$_1$, IM_0$_2$, IM_0$_3$ ont été formées à l'issue la deuxième étape 202 du procédé de la figure 2, et corrigées lors de la troisième étape d'autofocus 203, ces images IM_$0_1$, IM_$0_2$, IM_$0_3$ peuvent être combinées lors de la quatrième étape de combinaison 204. Simultanément à la combinaison de ces trois images, d'autres images IM_$0_x$, x>3, sont acquises (deuxième étape 202) et corrigées (troisième étape 203). Ainsi, des images de résolution intermédiaire peuvent être produites sans attendre que le temps d'éclairement complet $T_e$ soit écoulé.

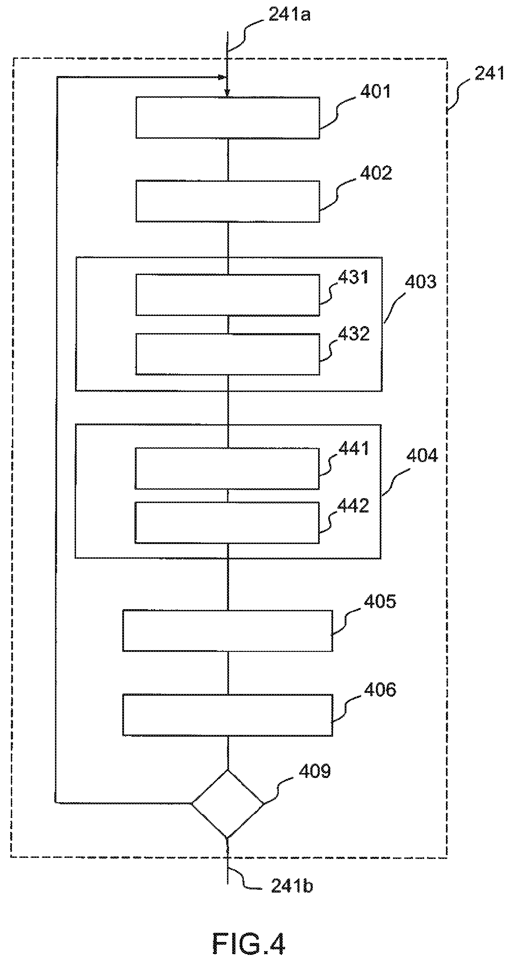

La figure 4 présente un synoptique précisant les étapes à exécuter pour la combinaison cohérente 241 des images dans un procédé de construction d'image SAR selon l'invention.

Lors d'une première étape 401, plusieurs images successives sont choisies parmi les 2k-1 images IM_$0_x$ fournies en entrée 241 a. Par exemple, trois images IM_$0_{i-1}$, IM_$0_i$, et IM_$0_{i+1}$ issues respectivement de trois sous-périodes successives $P_{i-1}$, $P_i$, et $P_{i+1}$ sont choisies, $1\_<\_i\_<\_2k-1$. Les sous-périodes $P_{i-1}$ et $P_{i+1}$, correspondant respectivement à la première IM_$0_{i-1}$ et à la troisième image IM_$0_{i+1}$, sont disjointes, et la sous-période $P_i$, correspondant à l'image centrale IM_$0_i$, chevauche temporellement la moitié de chacune des deux autres sous-périodes $P_{i-1}$ et $P_{i+1}$.

Lors d'une deuxième étape 402, une image de référence IM$_{ref}$ est choisie parmi les images sélectionnées lors de la première étape 401. Dans l'exemple, l'image de référence choisie est l'image centrale IM_$0_i$.

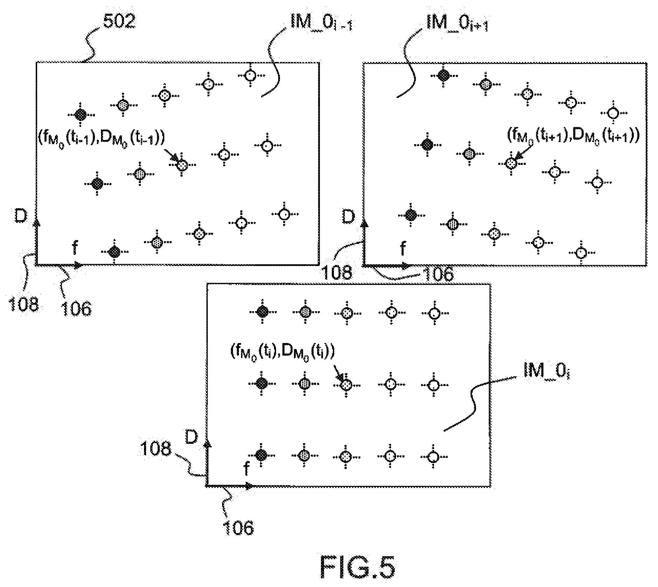

Lors d'une troisième étape 403, les images autres que l'image de référence IM$_{ref}$ - dans l'exemple, les images IM_$0_{i-1}$, et IM_$0_{i+1}$, - sont recalées temporellement par rapport à l'image de référence IM$_{ref}$ - dans l'exemple, par rapport à IM_$0_i$ -. En effet, chacune des images IM_$0_x$ étant initialement référencée par rapport à un instant fixé $t_x$ de sa sous-période d'éclairement $P_x$, les références temporelles de ces images doivent être modifiées, de sorte que lesdites images soient toutes référencées par rapport à un instant commun. Ce recalage temporel se fait en deux temps 431, 432. Dans un premier temps 431, les images sont recalées en position puis dans un second temps 432, les images sont recalées en phase. Cette troisième étape 403 est détaillée plus loin, en regard des figures 5, 6, 7a, 7b, et 7c.

Dans l'exemple, les deux images IM_$0_{i-1}$, et IM_$0_{i+1}$ sont recalées par rapport à l'instant de référence $t_i$ de l'image centrale IM_$0_i$, cette dernière image n'étant, en tant qu'image de référence, pas recalée. Selon un autre mode de réalisation, aucune image de référence IM$_{ref}$ n'est choisie et toutes les images choisies lors de la première étape 401 sont recalées par rapport à un instant différent de la référence temporelle de l'une des images à combiner. Avantageusement, l'instant de référence $t_{ref}$ commun est choisi pour être relativement central vis-à-vis de l'ensemble des sous-périodes $P_x$ à combiner, afin de diminuer l'écart maximum entre $t_{ref}$ et $t_x$.

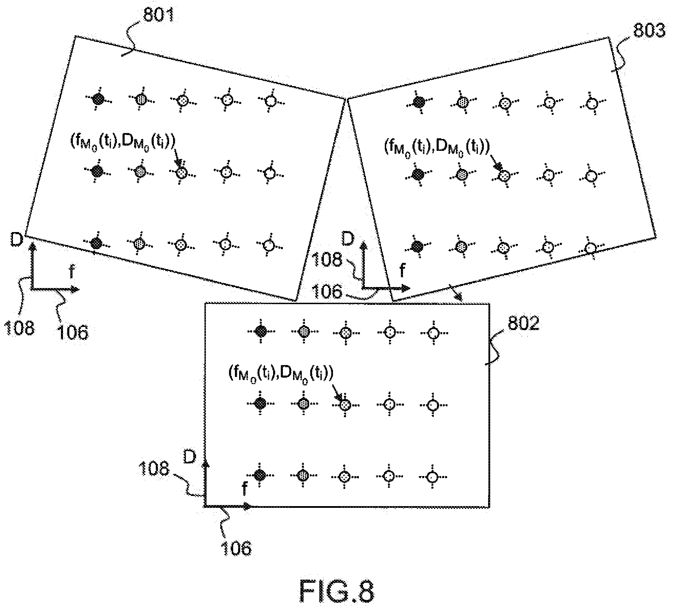

Lors d'une quatrième étape 404, les images autres que l'image de référence IM$_{ref}$ sont modifiées pour pouvoir être superposables à l'image de référence IM$_{ref}$. En effet, à l'issue de la troisième étape 403, les images IM_$0_x$ ne sont pas directement superposables car il subsiste un décalage résiduel suivant l'axe Doppler 106 et, dans une moindre mesure, suivant l'axe Distance 108 entre la position des réflecteurs fournie par l'image de référence IM$_{ref}$ et la position des réflecteurs lue sur une image différente de l'image de référence. La mise en superposition des images s'effectue alors en deux temps 441, 442. Dans un premier temps 441, un décalage résiduel en position est estimé ; dans un deuxième temps 442, ce décalage résiduel est corrigé et une fonction de dépondération est appliquée. Cette quatrième étape 404 est détaillée plus loin, en regard de la figure 8.

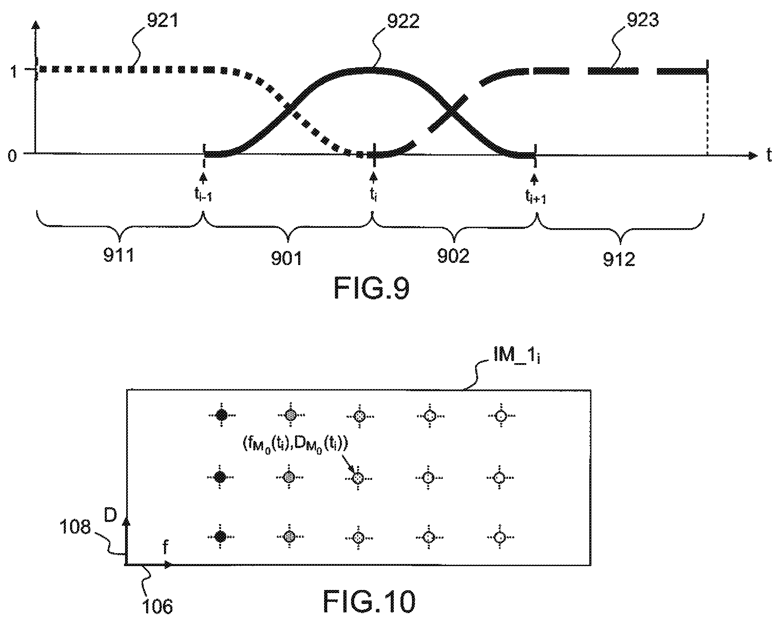

Lors d'une cinquième étape 405, les dernières discontinuités résiduelles en phase subsistant d'une sous-période d'éclairement $P_x$ à la suivante $P_{x+1}$ sont d'abord annulées, puis les signaux correspondant aux images focalisées et superposables, issues de la quatrième étape 404, sont raboutés dans le domaine temporel pour former un nouveau signal défini sur une sous-période d'éclairement égale à la durée de la concaténation des sous-périodes des images à combiner. Cette cinquième étape 405 est détaillée plus loin, en regard de la figure 9.

Lors d'une sixième étape 406, une transformée de Fourier suivant l'axe temporel est appliquée sur le nouveau signal obtenu lors de la cinquième étape 405, afin de produire l'image résultant de la combinaison cohérente des images initiales IM_$0_x$, cette image résultante étant associée à une durée de sous-éclairement élargie.

Ainsi, dans l'exemple, à l'issue de ces six étapes 401, 402, 403, 404, 405, 406, la combinaison des trois images IM_$0_{i-1}$, IM_$0_i$, et IM_$0_{i+1}$ génère une nouvelle image Distance-Doppler IM_$1_i$ de résolution $R_1$ sensiblement deux fois plus fine que la résolution $R_0$ des images initiales IM_$0_x$, l'image IM_$1_i$ étant référencée temporellement par rapport à l'instant central de la sous-période d'éclairement formée par la concaténation des sous-périodes d'éclairement $P_{i-1}$, $P_i$, et $P_{i+1}$ initiales.

Bien que l'exemple de mise en oeuvre présentement illustré soit lié à un mode d'acquisition radar de type spot, le procédé peut s'appliquer dans le cadre d'autres types d'acquisition. Aussi, lorsque le procédé selon l'invention est mis en oeuvre sur un radar fonctionnant en mode défilant - ce mode étant souvent désigné par le terme anglo-saxon « StripSAR » -, le gain en résolution dû à l'exécution d'une itération du procédé est inférieur ou égal à deux, tandis que la couverture spatiale obtenue est plus grande qu'en mode spot. En effet, en mode défilant, sur la durée d'une sous-période d'éclairement $P_{i+1}$ succédant une première sous-période d'éclairement $P_i$, l'empreinte du faisceau d'antenne s'est déplacée, diminuant la surface de la zone commune aux deux sous-périodes $P_i$ et $P_{i+1}$, mais augmentant la surface de la zone couverte pendant au moins une des sous-périodes $P_i$ et $P_{i+1}$. Cette remarque est a fortiori applicable à la mise en oeuvre du procédé sur un radar fonctionnant en mode balayant - ou, selon le terme anglo-saxon, « ScanSAR ».

Après la combinaison des images IM_$0_{i-1}$, IM_$0_i$, et IM_$0_{i+1}$, un test 409 est exécuté pour déterminer si au moins une image parmi les 2k-1 images IM_$0_x$ n'a pas été encore combinée avec d'autres images. S'il reste au moins

une image IM_0$_x$ à combiner, alors le procédé retourne à la première étape de choix 401 des images pour combiner d'autres images IM_0$_x$ entre-elles. Ainsi, des combinaisons sont effectuées sur des ensembles d'images différents jusqu'à ce que toutes les images IM_0$_x$ issues des sous-périodes d'éclairement P$_x$ aient été combinées au moins une fois. Selon une autre mise en oeuvre du procédé, seulement une portion du temps d'éclairement complet T$_e$ est utilisée ; dès lors, le test 409 susmentionné ne porte pas sur l'utilisation de toutes les 2k-1 images IM_0$_x$, mais il vérifie que toutes les images IM_0$_x$ correspondant à ladite portion temporelle ont été combinées au moins une fois.

Lorsque le test 409 indique que toutes les images IM_0$_x$ ont été utilisées pour au moins une combinaison, les images IM_1$_x$ générées par les combinaisons sont transmises en sortie 241 b.

Pour mieux comprendre l'étape 241 de combinaison cohérente d'images, les étapes présentées en figure 4 sont détaillées en regard des figures 5, 6, 7a, 7b, 7c, 8, 9, et 10.

La figure 5 présente un exemple de trois images IM_0$_{i-1}$, IM_0$_i$, et IM_0$_{i+1}$ à combiner, ces images étant, lors de la combinaison cohérente 241 (figure 4), fournies en sortie de l'étape 401 de choix des images parmi les 2k-1 images initiales. Chaque image IM_0$_x$, i-1_$\leq$_x_$\leq$_i+1> présente les caractéristiques suivantes :

- l'image IM_0$_x$ est focalisée, autrement dit, les réponses impulsionnelles sont canoniques sur les deux axes (grâce à l'étape d'autofocus 203, figure 2) ;
- l'image IM_0$_x$ est, dans l'exemple, référencée temporellement par rapport au centre de la sous-période d'éclairement P$_x$ correspondante ;
- l'image IM_0$_x$ est centrée sur le point de la zone visée par le faisceau antennaire à l'instant central de la sous-période P$_x$.

La troisième étape 403 (figure 4) du procédé de combinaison cohérente d'images comprend, dans un premier temps 431, un recalage en position. Considérant l'instant de référence t$_i$ de l'image centrale IM_0$_i$ comme le nouvel instant de référence des trois images à combiner, les images IM_0$_{i-1}$, IM_0$_{i+1}$ sont, dans l'exemple, les seules concernées par l'opération de recalage, l'image IM_0$_i$ étant considérée comme une image de référence IM$_{ref}$.

Soit une image à recaler IM_0$_x$, x≠i. La zone imagée 502 sur l'image IM_0$_x$ occupe à l'instant t$_i$ une plage Doppler et une plage Distance notées respectivement | f$_{min,x}$ ; f$_{max,x}$ | | D$_{min,x}$ ; D$_{max,x}$ |. Cette plage Doppler-Distance est d'abord maillée avec une grille identique à celle de l'image IM_0$_i$, c'est à dire en reprenant le même échantillonnage suivant l'axe Doppler et le même échantillonnage suivant l'axe Distance. Dans cette nouvelle grille Doppler-Distance, chaque couple (f$_M$(t$_i$), D$_M$(t$_i$)) caractérise à l'instant t$_i$ le Doppler et la Distance d'un réflecteur M imagé au cours de la sous-période d'éclairement P$_x$ associée à l'image IM_0$_x$. Le recalage en position de l'image IM_0$_x$ est effectué en remplissant cette grille (référencée temporellement par rapport à t$_i$) en affectant à chacun de ses pixels une valeur prélevée dans l'image IM_0$_x$, référencée par rapport à un instant t$_x$. Ainsi, pour chaque couple (f$_M$(t$_i$),D$_M$(t$_i$)) caractérisant à l'instant t$_i$ le Doppler et la Distance d'un réflecteur M imagé au cours de la sous-période d'éclairement P$_x$, les étapes suivantes sont exécutées :

- estimer à l'instant t$_x$ le Doppler $\hat{f}_M(t_x)$ et la distance $\hat{D}_M(t_x)$ du réflecteur M en fonction de :
  - la connaissance du Doppler et la distance du réflecteur M à l'instant t$_i$ ;
  - la mesure de la trajectoire du radar entre les instants t$_i$ et t$_x$
- prélever dans l'image IM_0$_x$ la valeur lue à cette position estimée $(\hat{f}_M(t_x),\hat{D}_M(t_x))$ ;
- affecter cette valeur au pixel associé au couple (f$_M$(t$_i$), D$_M$(t$_i$)) dans la nouvelle grille.

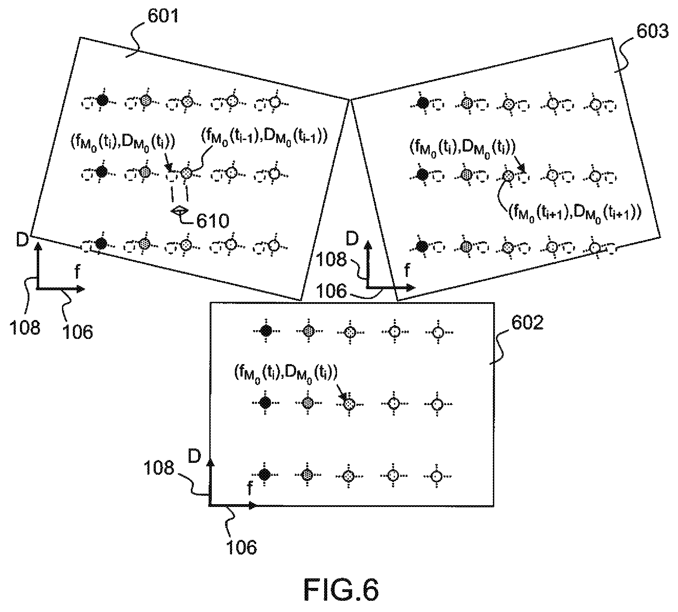

La figure 6 montre les trois images de la figure 5 modifiées à l'issue de l'étape de recalage en position 431.

Dans le cas idéal d'une connaissance parfaite du mouvement relatif radar-réflecteurs, l'opération de recalage en position fournirait en sortie trois images Distance-Doppler sur lesquelles les réflecteurs imagés communément lors des trois sous-périodes d'éclairement P$_{i-1}$, P$_i$, et P$_{i+1}$ occuperaient des positions identiques. Or, l'opération de recalage estime pour chaque position de réflecteur une migration en distance et une migration en Doppler entre deux instants t$_i$ et t$_x$ en se basant sur une mesure de la trajectoire du radar, laquelle mesure est par nature imparfaite.

Par conséquent, les trois images Distance-Doppler 601, 602, 603 de la figure 6 ne sont pas encore parfaitement « superposables » à ce stade : entre une image IM_0$_x$, x≠i, et l'image IM_0$_i$, il subsiste un décalage résiduel 610 commun à tous les points, suivant l'axe Doppler 106 et dans une moindre mesure suivant l'axe Distance 108.

Selon un mode de réalisation, un calcul approximatif de migration en Distance et de migration en Doppler est effectué pour les couples (f$_M$(t$_i$),D$_M$(t$_i$)) appartenant à la grille associée à la sous-période d'éclairement P$_x$. En effet, ces migrations varient quasi linéairement en fonction de la position des points en Distance et en Doppler. On peut ainsi se limiter à calculer de manière exacte ces migrations pour un nombre restreint de points espacés dans la zone imagée, puis se contenter d'interpoler linéairement pour les autres points ces résultats exacts.

Par ailleurs, dans la nouvelle grille associée à une sous-période d'éclairement $P_r$, la valeur affectée au pixel associé au couple $(f_M(t_i), D_M(t_i)))$ est la valeur lue à la position $(\hat{f}_M(t_x), \hat{D}_M(t_x))$ dans l'image IM_0$_x$. Or cette dernière position est généralement répartie sur plusieurs pixels de l'image IM_0$_x$. Une interpolation bi-dimensionnelle est donc nécessaire.

Afin d'assurer la focalisation de chacun des points imagés sur une sous-période d'éclairement sensiblement doublée par rapport à la durée des sous-périodes $P_{i-1}$, $P_i$, $P_{i+1}$ initiales, le signal associé à un réflecteur donné doit être raccordé en phase d'une sous-période d'éclairement à l'autre. La troisième étape 403 comprend, dans un deuxième temps, un recalage en phase qui vise précisément à supprimer, pour chaque réflecteur, les sauts de phase résiduels qui, à ce stade du traitement, subsistent d'une sous-période d'éclairement à une autre.

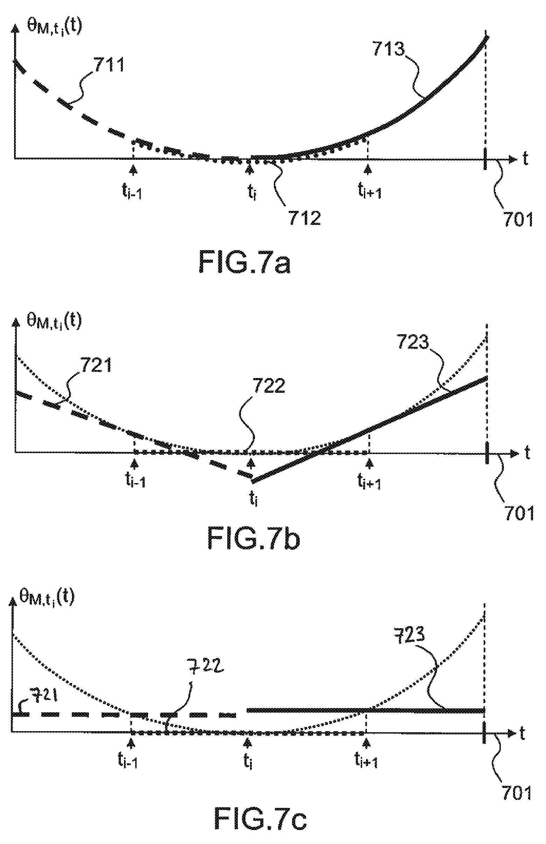

Les figures 7a, 7b et 7c illustrent cette étape de recalage en phase 432 des images 601, 602, 603 de la figure 6. Pour rappel, la focalisation par rapport à l'instant $t_i$ consiste, pour un réflecteur M donné, à annuler la composante non linéaire de phase $\Phi_{M,ti}(t)$ dans le signal rétrodiffusé par ce réflecteur M. On conserve ainsi uniquement la composante linéaire prélevée à l'instant $t_i$, composante linéaire dont la pente est proportionnelle au Doppler à l'instant $t_i$, noté $f_M(t_i)$. La phase du signal au cours du temps est exprimé comme suit :

$$\frac{4\pi}{\lambda} D_M(t) = \frac{4\pi}{\lambda} D_M(t_i) - 2\pi \times f_M(t_i) \times (t - t_i) + \phi_{M,t_i}(t)$$

où le terme $\frac{4\pi}{\lambda} D_M(t)$ représente la phase du signal au cours du temps ; le terme $\frac{4\pi}{\lambda} D_M(t_i)$ représente la phase du signal à l'instant $t_i$ ; le terme $2\pi \times f_M(t_i) \times (t - t_i)$ permet le positionnement sur l'axe Doppler 106 ; et $\phi_{M,ti}(t)$ est le terme de phase d'ordre supérieur ou égal à deux ; c'est ce dernier terme que l'on cherche à annuler pour assurer la focalisation.

Ce terme de phase $\Phi_{M,ti}(t)$ avant correction est représenté sur un graphique en figure 7a, $\Phi_{M,ti}(t)$ en ordonné sur le graphique, l'abscisse correspondant au temps 701. Il doit être annulé en vue d'effectuer une combinaison cohérente 241 des images.

Dans un premier temps, chaque image IM_0$_x$, i-1$\leq$x$\leq$i+1, est focalisée, autrement dit, le terme de phase d'ordre supérieur ou égal à deux est compensé sur chacune des sous-périodes d'éclairement $P_{i-1}$, $P_i$, $P_{i+1}$. Néanmoins, le positionnement du réflecteur M sur l'axe Doppler reste différent sur les trois images IM_0$_{i-1}$, IM_0$_i$, IM_0$_{i+1}$, comme le montre la figure 7b, qui illustre l'évolution du résidu de phase 711, 712, 713 de chaque sous-période d'éclairement $P_{i-1}$, $P_i$, $P_{i+1}$ en fonction du temps 701 après la focalisation précitée. A l'issue de cette focalisation, le résidu de phase associé à une sous-période d'éclairement $P_x$ est égal à :

$$\phi_{M,t_i}(t_x) - 2\pi \times \left[ f_M(t_x) - f_M(t_i) \right] \times (t - t_x)$$

Dans un deuxième temps, pour annuler la composante linéaire du résidu de phase, le réflecteur M est recalé par rapport à une référence de temps commune $t_i$.

Néanmoins, après ce recalage, il subsiste un résidu de phase constant, différent d'une sous-période d'éclairement à une autre, comme l'illustre la figure 7c, qui montre l'évolution du résidu de phase 721, 722, 723 de chaque sous-période d'éclairement $P_{i-1}$, $P_i$, $P_{i+1}$ en fonction du temps après le recalage en position précité. A l'issue de ce recalage en position, le résidu de phase associé à une sous-période d'éclairement $P_x$ est égal à $\Phi_{M,ti}(t_x)$. Ce dernier terme résiduel doit être annulé.

Aussi, dans un troisième temps, pour chaque image IM_0$_x$ différente de IM_0$_i$ - dans l'exemple, IM_0$_{i-1}$ et IM_0$_{i+1}$ -, on effectue les opérations suivantes : pour chaque pixel G de l'image IM_0$_x$ :

- estimer le terme résiduel de phase $\hat{\phi}_{M,ti}(t_x)$ en fonction de :

  - la connaissance du couple $(f_M(t_i), D_M(t_i)))$ associé à la position du pixel considéré ;
  - la mesure de la trajectoire du radar entre les instants $t_i$ et $t_x$

- multiplier la valeur affectée au pixel G par le terme $\exp(-j \times \hat{\phi}_{M,ti}(t_x))$

De même que pour l'étape de recalage en position 431 (figure 4), dans un souci d'économie de ressources de calcul, il n'est pas indispensable d'effectuer un calcul exact du terme résiduel de phase pour chaque pixel. Ces résultats peuvent être interpolés linéairement à partir d'un nombre restreint de calculs exacts faits pour des points régulièrement espacés de la zone imagée.

Par ailleurs, puisque l'estimation du terme résiduel de phase est basée sur une mesure imparfaite de la trajectoire du radar, il subsiste, à l'issue de cette étape de recalage en phase 432, un terme résiduel parasite de phase non compensé. Cependant, ce dernier terme parasite peut désormais être considéré comme identique pour tous les réflecteurs.

La quatrième étape 404 (figure 4) du procédé de combinaison cohérente des images est une mise en superposition des images à combiner. Après les corrections appliquées lors de la troisième étape 403, le décalage résiduel en position peut être considéré, à l'issue de cette troisième étape 403, comme identique pour tous les réflecteurs imagés.

Dans un premier temps 441, pour chacune des images $IM\_0_x$ telles que $x \neq i$, ce décalage résiduel en position selon l'axe Doppler 106 et l'axe Distance 108, noté $(\delta f_{x/i}, \delta D_{x/i})$ par la suite, est estimé par rapport à l'image de référence $IM\_0_i$. Pour estimer $\delta f_{x/i}, \delta D_{x/i}$, on effectue tout d'abord une corrélation entre l'image $IM\_0_i$, - exprimée en module car l'information de phase pouvant biaiser la corrélation - et l'image $IM\_0_x$, obtenue à l'issue de la troisième étape 403 de la combinaison cohérente d'images (figure 4) et également exprimée en module.

Les deux paramètres $\delta f_{x/i}$ et $\delta D_{x/i}$ peuvent être directement estimés en effectuant une corrélation bi-dimensionnelle. Cependant, la connaissance du seul paramètre $\delta f_{x/i}$ permet de déduire la valeur de $\delta D_{x/i}$. Il est dès lors possible, pour limiter la charge de calcul, de se contenter d'une corrélation mono-dimensionnelle suivant l'axe Doppler 106 afin d'estimer uniquement $\delta f_{x/i}$. Dans ce cas, il est nécessaire au préalable de moyenner en puissance les cases distance contiguës afin de dégrader la résolution suivant l'axe Distance 108.

Le décalage $(\delta f_{x/i}, \delta D_{x/i})$ est donc calculé en estimant la position du pic de corrélation entre deux images $IM\_0_i$ et $IM\_0_x$, $x \neq i$. Cette estimation peut, par exemple, être effectuée de la manière suivante :

- calculer, par transformée de Fourier, le spectre associé à l'image $IM\_0_i$ en module ;
- calculer, par transformée de Fourier, le spectre associé à l'image $IM\_0_x$ en module ;
- multiplier le spectre de $IM\_0_x$ par le conjugué du spectre de $IM\_0_i$ ;
- appliquer une transformée de Fourier inverse sur le résultat obtenu à l'étape précédente, afin d'obtenir la fonction d'inter-corrélation des deux images $IM\_0_x$, $IM\_0_i$ ;
- localiser la position du pic de corrélation en cherchant la valeur maximale de la fonction d'inter-corrélation ;
- éventuellement, affiner la position du pic de corrélation par interpolation locale pour obtenir une précision meilleure que la taille du pixel.

A l'issue de l'étape de recalage en position 431 (figure 4), les images $IM\_0_x$, $x \neq i$ sont pondérées, contrairement à l'image de référence $IM\_0_i$ qui ne subit pas l'étape de recalage en position 431. Dans un souci d'homogénéité, il est préférable d'effectuer les corrélations en considérant une image de référence $IM\_0_i$ pondérée.

Dans un deuxième temps 442, une fois estimé, le décalage résiduel en position est corrigé pour chacune des images $IM\_0_x$ telles que $x \neq i$. Par exemple, cette étape de correction 442 comporte les sous-étapes suivantes :

- corriger le décalage en Distance, c'est à dire appliquer à toute l'image $IM\_0_x$ un décalage égal à $-\delta D_{x/i}$ suivant l'axe Distance, comme suit :

  o appliquer une transformée de Fourier suivant l'axe Distance, autrement dit, passer dans le domaine dit « Fréquence rapide » ;
  o multiplier par un signal dont la phase varie linéairement en fonction de la « Fréquence rapide », avec une pente proportionnelle à $\delta D_{x/i}$ ;
  o appliquer une transformée de Fourier inverse suivant l'axe « Fréquence rapide » pour revenir dans le domaine Distance ;

- corriger le décalage en Doppler, c'est à dire appliquer à toute l'image $IM\_0_x$ un décalage égal à $-\delta f_{x/i}$ suivant l'axe Doppler, comme suit :

  o appliquer une transformée de Fourier inverse suivant l'axe Doppler, autrement dit, passer dans le domaine temporel ;
  o multiplier le signal temporel par un signal dont la phase varie linéairement en fonction du temps, avec une pente proportionnelle à $\delta f_{x/i}$ ;
  o appliquer une transformée de Fourier suivant l'axe temporel pour revenir dans le domaine Doppler.

La dernière opération de retour dans le domaine Doppler par application d'une transformée de Fourier est superflue dans le cas d'une recombinaison cohérente 241 car l'étape 405 de raboutage des signaux, qui suit l'étape 404 de mise en superposition des images, s'effectue dans le domaine temporel.

Parallèlement à l'étape 442 de correction des décalages résiduels en position, une opération dite de « dépondération » des signaux est menée. En effet, à ce stade du traitement, les images $IM\_0_x$ telles que $x \neq i$, sont

pondérées. En d'autres termes, dans le domaine [temps-Fréquence rapide], un signal associé à un réflecteur ponctuel parfait ne présente plus la même variation d'amplitude qu'initialement dans l'image d'entrée non pondérée (dans le cas d'un mode radar Spot, cette amplitude initiale est constante).

Les causes de la présence de cette fonction de pondération sont notamment les suivantes :

- notamment, il existe un phénomène de « rotation » des lobes secondaires en Distance et en Doppler, dû au fait que l'axe radarréflecteur tourne entre l'instant $t_x$ et l'instant $t_i$ ;
- au cours de l'étape de recalage en phase 432, les corrections de phase appliquées sur l'image IM_$0_x$ ne déphasent pas de manière identique le lobe principal et les lobes secondaires associé à un même réflecteur (puisque la phase correctrice appliquée varie quasi linéairement en fonction du Doppler et de la Distance).

Aussi, afin de prendre en compte l'impact des phénomènes susmentionnés, la fonction de pondération est calculée en appliquant les opérations de recalage à un signal synthétique « témoin » reproduisant le comportement d'un réflecteur ponctuel parfait.

L'étape de dépondération permet d'annuler l'effet de la fonction de pondération ainsi calculée. Cette étape de dépondération est intégrée à la correction des décalages résiduels en position 442. Elle s'effectue d'abord suivant l'axe « Fréquence rapide » en divisant le signal par la fonction de pondération calculée, puis de la même manière suivant l'axe temporel.

A l'issue de la dépondération, dans le domaine [temps-Fréquence rapide], le signal associé à un réflecteur ponctuel parfait appartenant à la zone imagée présente désormais une variation d'amplitude quasiment identique à celle qu'il possédait initialement dans l'image d'entrée non-pondérée. Cette variation d'amplitude est nulle dans le cas d'un mode radar Spot.

La figure 8 présente les trois images de la figure 6 à l'issue de l'exécution d'une étape 404 de superposition des images. On dispose donc, à ce stade du traitement, de trois images 801, 802, 803 focalisées dans le domaine distance Distance-Doppler présentant les caractéristiques suivantes :

- ces images 801, 802, 803 sont référencées temporellement par rapport à un même instant, qui, dans l'exemple, est l'instant central $t_i$ de la nouvelle sous-période d'éclairement de durée double obtenue en concaténant les trois sous-périodes d'éclairement initiales $P_{i-1}$, $P_i$, $P_{i+1}$ ;
- ces images 801, 802, 803 sont superposables, par conséquent :

  o un même réflecteur imagé lors des trois sous-périodes d'éclairement $P_{i-1}$, $P_i$, $P_{i+1}$ est positionné de manière identique sur les trois images (si l'on considère uniquement le lobe principal associé au réflecteur) ;
  o le signal issu d'un même réflecteur ne présente pas de discontinuité en amplitude d'une sous-période d'éclairement à une autre ; si une discontinuité de phase subsiste, elle peut être considérée comme commune à l'ensemble des réflecteurs imagés.

Les images superposables 801, 802, 803 sont ensuite raboutés au cours de la cinquième étape 405 (figure 4) de la combinaison cohérente d'images.

Les opérations précédentes de recalage en position 431 et de recalage en phase 432 exploitent une mesure de la trajectoire du radar par nature imparfaite ; cette erreur sur la connaissance du mouvement relatif Radar-réflecteurs au cours de l'éclairement est la source d'erreurs résiduelles sur les images du domaine Distance-Doppler ainsi recalées.

Néanmoins, d'une part, au cours de la quatrième étape 404, les décalages résiduels en position ont été estimés par corrélations puis corrigés afin d'obtenir des images superposables ; d'autre part, l'exécution de l'étape 431 de recalage en phase a permis de garantir que la discontinuité résiduelle en phase d'une sous-période d'éclairement à l'autre pouvait désormais être considérée comme identique pour tous les réflecteurs imagés. Pour une sous-période d'éclairement $P_x$, $x \neq i$, ce déphasage résiduel commun à tous les réflecteurs est noté $\delta\Phi_{x/i}$.

Ce terme de phase parasite $\delta\Phi_{x/i}$ peut être facilement estimé en étudiant dans le domaine temporel les signaux issus des deux images dans le domaine Distance-Doppler focalisées superposables associées aux sous-périodes d'éclairement $P_i$ et $P_x$. En effet, sur la portion temporelle commune à ces deux sous-périodes d'éclairement $P_i$ et $P_x$, le signal issu d'un même réflecteur est identique à un déphasage près. Ce déphasage est justement égal à $\delta\Phi_{x/i}$.

Par conséquent, $\delta\Phi_{x/i}$ peut, par exemple, être calculé de la manière suivante :

- pour la sous-période $P_x$, extraire la portion temporelle commune avec la sous-période $P_i$, sur le signal temporel associé à l'image IM_$0_x$ focalisée superposable dans le domaine [Distance-Doppler]. Cette extraction, notée $E_x$ est un tableau 2D dans le domaine [Temps-Distance] ;
- pour la sous-période de référence $P_i$, extraire la portion temporelle commune avec la sous-période $P_x$, sur le signal temporel associé à l'image IM_$0_i$ focalisée superposable dans le domaine [Distance-Doppler]. Cette extraction

est notée $E_i$ ;

- multiplier terme à terme $E_x$ et le conjugué de $E_i$. Le résultat est noté $E_{x/i}$ ;
- $\delta\Phi_{x/i}$ est égal à la phase du nombre complexe obtenu en sommant tous les termes de $E_{x/i}$.

Pour la sous-période d'éclairement $P_x$, la correction du terme de phase parasite $\delta\Phi_{x/i}$ consiste simplement à multiplier par $\exp(-j.\delta\Phi_{x/i})$ le signal temporel associé à l'image Distance-Doppler focalisée superposable $IM\_0_x$.

Puisque désormais il ne subsiste plus aucune discontinuité ni en phase ni en amplitude, les signaux temporels associés aux trois images Distance-Doppler focalisées superposables peuvent maintenant être positionnés les uns à la suite des autres suivant l'axe temporel, en occupant leurs plages temporelles respectives. Afin d'assurer une transition progressive d'une sous-période d'éclairement à une autre, cette opération de raboutage est pondérée, comme illustré en figure 9.

En effet, une fonction de pondération suivant l'axe temporel est appliquée à chacun des signaux temporels associés aux trois sous-périodes d'éclairement $P_{i-1}$, $P_i$, $P_{i+1}$. La figure 9 présente, à titre d'exemple, l'évolution des coefficients de pondération 921, 922, 923, chacun desdits coefficients étant appliqué sur un signal lié à une sous-période $P_x$. Dans l'exemple, le premier coefficient 921 s'applique au signal de la sous-période $P_{i-1}$, le deuxième coefficient 922 s'applique au signal de la sous-période $P_i$, et le troisième coefficient 923 s'applique au signal de la sous-période $P_{i+1}$. Le signal rabouté, défini sur une durée double de la durée initiale d'une sous-période d'éclairement $P_x$, se calcule de la manière suivante :

- sur les portions temporelles communes 901, 902 à deux sous-périodes $P_x$, $P_{x+1}$ d'éclairement consécutives, le signal résultat est égal à la somme des deux signaux pondérés associés à ces deux sous-périodes d'éclairement, $P_x$, $P_{x+1}$ ;
- sur les portions temporelles 911, 912 appartenant à une seule sous-période d'éclairement $P_x$, le signal résultat est une copie du signal temporel associé à cette sous-période d'éclairement $P_x$.

La sixième étape 406 du procédé de combinaison cohérente d'images (figure 4) permet de générer l'image Distance-Doppler résultant de la combinaison des images initiales $IM\_0_x$. Une transformée de Fourier suivant l'axe temporel est appliquée sur le signal rabouté, en prenant en compte une durée d'analyse égale à la durée des sous-périodes concaténées, qui, dans l'exemple est égale à deux fois la durée d'une sous-période d'éclairement $P_x$ initiale. L'image Distance-Doppler $IM\_1_i$ ainsi générée présente les caractéristiques suivantes :

- la taille de la case Doppler est maintenant deux fois plus fine que sur les images initiales $IM\_0_x$ ;
- cette image $IM\_1_i$ est référencée par rapport au centre de la nouvelle sous-période d'éclairement de durée double ;
- l'image $IM\_1_i$ est non pondérée ;
- l'image $IM\_1_i$ peut présenter une défocalisation résiduelle, celle-ci étant néanmoins minime, grâce aux différentes opérations de recalage déjà effectuées dans le but de superposer « proprement » les trois images $IM\_0_{i-1}$, $IM\_0_i$, $IM\_0_{i+1}$ et annuler les discontinuités de phase et d'amplitude entre les signaux temporels associés aux différentes sous-périodes d'éclairements $P_x$.

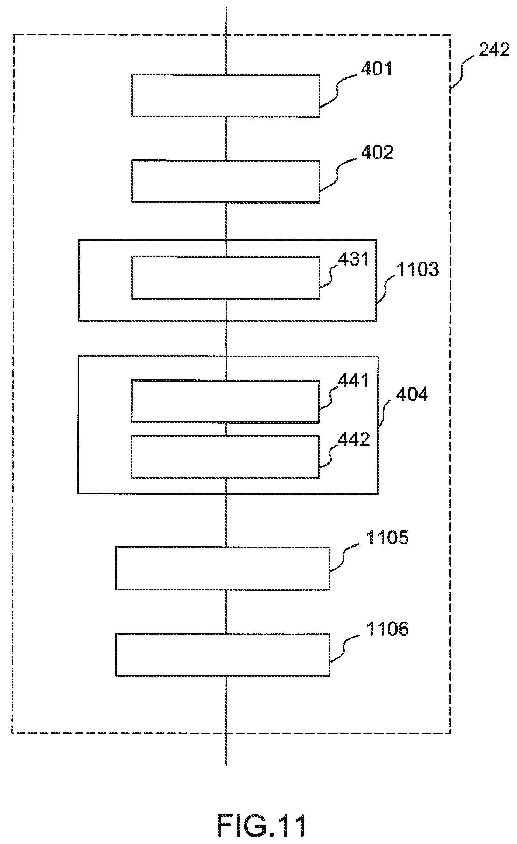

La figure 11 présente un synoptique détaillant les étapes à exécuter pour la combinaison non cohérente 242 des images (figures 2b, 2c) dans un procédé de construction d'image SAR selon l'invention.

Contrairement aux étapes de combinaison cohérente 241 des images, la combinaison non cohérente ne permet pas d'affiner la résolution et conserve au final sur l'image de sortie la résolution initiale des images Distance-Doppler d'entrée. En revanche, le découpage en sous-périodes d'éclairement 201 permet de réaliser une opération de « multi-vues » azimut afin de réduire le bruit radiométrique de l'image finale et/ou d'agrandir la taille de la zone imagée. L'étape de recombinaison non-cohérente 242 comprend les sous-étapes suivantes :

- choisir les images à combiner, 401 ;
- choisir une image de référence 402 ;
- recaler temporellement les images choisies précédemment, étape référencée 1103 ;
- mettre en superposition les images recalées précédemment, 404 ;
- mettre en conformité les images Distance-Doppler focalisées superposables, issues de l'étape précédente 1103, dans un repère orthonormé commun $\Re\left(0, \vec{x}, \vec{y}, \vec{z}\right)$, dont l'origine O correspond par exemple au centre de la zone imagée lors de l'acquisition complète, et dont l'axe $\vec{z}$ est colinéaire à la verticale au point O, étape référencée 1105 ;
- dans le cas d'un mode radar défilant ou balayant, pondérer spatialement les images conformes superposables pour prendre en compte le déplacement de l'empreinte au sol du faisceau radar au cours de l'éclairement (cette opération de pondération spatiale est inutile dans le cas d'un mode radar Spot), étape non représentée sur la figure 11 ;

■ sommer en puissance les images conformes superposables, étape référencée 1106 sur la figure 11.

La première étape 401 de choix des images à combiner, la deuxième étape 402 de choix d'une image de référence 402, et la quatrième étape 404 de mise en superposition des images sont, dans l'exemple, identiques à celles exécutées lors d'une combinaison cohérente 241 (figures 2a, 2c, 4) des images.

La troisième étape 1103 de la combinaison non cohérente 242 diffère de la troisième étape 403 (figure 4) de la combinaison cohérente d'images 241 car l'étape de recalage en phase 432 n'est pas requise dans le cas d'une combinaison non cohérente 242.

Par ailleurs, les opérations de dépondération effectuées lors de la correction du décalage en position 442 au cours quatrième étape 404 (figure 4) de la combinaison cohérente d'images 241 sont facultatives dans le cas d'une combinaison non cohérente 242. Par conséquent, selon une autre mise en oeuvre du procédé selon l'invention, cette dépondération n'est pas effectuée.

Selon un autre mode de mise en oeuvre du procédé selon l'invention, la mise en conformité des images associées aux différents sous-périodes d'éclairement peut être directement effectuée à partir des images Distance-Doppler initiales $IM\_0_x$ (référencées par rapport à des instants différents), à condition de prendre en compte les termes correctifs $\delta f_{x/i}$ et $\delta D_{x/i}$ dans l'opération de mise en conformité elle-même. On économise ainsi l'opération de correction des décalages résiduels en position sur les images Distance-Doppler référencées par rapport à $t_i$ mais non superposables.

Par ailleurs, dans le cas d'un mode radar Spot, on peut commencer par sommer en puissance les images Distance-Doppler focalisées superposables pour ensuite ne mettre en conformité qu'une seule image Distance-Doppler multi-vues. Néanmoins, dans ce cas, l'image finale conforme sera très légèrement dégradée, car la transformation d'une image Distance-Doppler en une image conforme nécessite d'interpoler l'image Distance-Doppler. Or, cette interpolation sera de qualité moindre sur une image Distance-Doppler multi-vues fournissant uniquement une information en module (sans information de phase).

Selon un autre mode de mise en oeuvre du procédé selon l'invention, lorsque l'on cherche une image finale conforme pondérée, on commence par sommer en puissance des images Distance-Doppler focalisées, superposables et pondérées. On économise ainsi l'opération de dépondération lors de la correction des décalages résiduels en position.

Le procédé selon l'invention s'applique particulièrement bien à la construction d'images SAR de haute résolution à partir d'un aéronef pourvu d'un radar à longue portée configuré pour éclairer une même zone pendant une longue durée. Par exemple, le procédé peut être avantageusement utilisé dans le cadre de la surveillance d'une zone à risques. Néanmoins, le procédé peut être utilisé pour un large éventail de modes SAR. Par exemple, il est particulièrement approprié aux modes comportant au moins une des caractéristiques suivantes :

- les modes SAR à long temps d'éclairement, pour lesquels la qualité de mesure de la trajectoire du centre de phase de l'antenne est insuffisante pour obtenir une qualité de focalisation acceptable ;
- les modes SAR de haute résolution avec de fortes contraintes pour l'obtention d'image ;
- les modes SAR pour lesquels une image sous-résolue est demandée avant l'élaboration de l'image en pleine résolution ;
- les modes SAR multi-vues, en particulier lorsqu'il est impossible d'augmenter la bande émise pour faire du multi-vues en distance, rendant alors indispensable le multi-vues en azimut.

Par ailleurs, même si le mode présenté pour l'application du procédé selon l'invention est le mode Spot, le procédé peut également être appliqué à des modes offrant des résolutions plus grossières, tels que les modes de type défilant ou balayant, ces deux modes étant plus souvent désignés par les termes anglo-saxons respectifs « StripSAR » et « ScanSAR ».

Les avantages du procédé selon l'invention sont multiples. Tout d'abord, il permet d'améliorer l'efficacité et la robustesse du traitement d'autofocus. Contrairement aux techniques classiques qui exploitent d'emblée l'intégralité de l'éclairement radar, les traitements d'autofocus sont appliqués à des résolutions successives qui s'affinent progressivement au cours de l'exécution du procédé, les premiers traitements d'autofocus étant appliqués sur des temps d'éclairement courts. De ce fait, les motifs de défocalisation associés occupent un nombre restreint de cases Doppler, ce qui les rend faciles à estimer et à corriger. De plus, travailler sur des temps d'éclairement courts permet d'estimer avec efficacité les composantes hautes fréquences de l'erreur de phase parasite, les composantes de plus basses fréquences étant estimées au cours des itérations suivantes, lesquelles travaillent sur des temps d'éclairement de plus en plus longs. Ainsi, cette approche « multi-résolutions », avec l'augmentation progressive des temps d'observation, autorise une estimation beaucoup plus fine et robuste de l'erreur de phase parasite, puisqu'elle adapte graduellement le temps d'observation à la plage de fréquences de l'erreur recherchée.

Un autre avantage du procédé selon l'invention est qu'il est possible de combiner les images issues des premières sous-périodes d'éclairement dès que ces premières sous-périodes d'éclairement ont été effectuées, sans attendre le terme de la période d'éclairement complète. De cette manière, des traitements peuvent être exécutés parallèlement à la collecte des données par le radar, ce qui permet notamment d'optimiser l'utilisation des ressources de traitement et de réduire la durée entre la fin de l'acquisition et la fin du calcul de l'image en pleine résolution. En outre, si la puissance de calcul le permet, des images de résolution dégradée peuvent être disponibles avant même la fin de l'éclairement complet, de sorte qu'une exploitation anticipée de ces images puisse être accomplie, particulièrement dans le cadre d'une application en temps réel. Par exemple, un utilisateur du système radar peut, au plus tôt, identifier une zone d'intérêt sur ces images aux résolutions dégradées, puis désigner ladite zone pour mobiliser les ressources de traitement en vue d'affiner plus rapidement la résolution de l'image sur cette zone.

Par ailleurs, le procédé selon l'invention de construction d'une image radar à faible bruit radiométrique intègre naturellement la formation d'image en mode multi-vues azimut. Contrairement à un procédé classique de formation d'image en mode multi-vues azimut, dans lequel, pour intégrer N vues, il est généralement nécessaire de construire préalablement une image de résolution N fois plus fine que la résolution souhaitée, le procédé selon l'invention permet de construire une image N-vues azimut sans jamais calculer une image sur-résolue d'un facteur N, ce qui, notamment, permet de diminuer la charge de calcul requise pour exécuter le procédé.

## Revendications

1. Procédé de construction d'images radar focalisées comprenant au moins les étapes suivantes :

   - découper la période d'éclairement du radar en p sous-périodes, deux sous-périodes successives se chevauchant temporellement (201) ;
   - choisir $n_0$ sous-périodes successives parmi les p sous-périodes, et pour chacune de ces $n_0$ sous-périodes, effectuer des acquisitions radar pour générer une image $IM\_0_x$ de résolution $R_0$ (202) ;
   - appliquer un traitement d'autofocus sur chacune des $n_0$ images $IM\_0_x$ générées (203) ;
   - combiner les $n_0$ images (204) traitées par autofocus afin de générer au moins une nouvelle image radar $IM\_1_x$ focalisée
   - le procédé étant **caractérisé en ce que** les étapes de combinaison des images (204) et d'autofocus (203) sont répétées itérativement pour obtenir une image de résolution souhaitée $R_{fin}$, $n_0$ images focalisées étant générées à l'issue d'un traitement d'autofocus (203), le procédé comporte une phase itérative comprenant au moins les étapes suivantes :

     - initialiser des variables $n_i$ et $R_i$ comme suit : $n_i=n_0$ et $R_i=R_1$ ;
     - tant que la résolution $R_i$ est plus grossière que la résolution $R_{fin}$ souhaitée :

       o répartir les $n_i$ images de résolution $R_i$ générées précédemment, dans $n_{i+1}$ ensembles (311), chacun desdits ensembles contenant au moins deux images, les images se succédant temporellement ;
       o pour chacun des $n_{i+1}$ ensembles (311) d'images de résolution $R_i$:

         • combiner (241) les images de l'ensemble (311) pour générer une nouvelle image de résolution plus fine $R_{i+1}$ ;
         • appliquer un traitement d'autofocus (203) sur la nouvelle image de résolution plus fine $R_{i+1}$ ;

       o mettre à jour les variables $n_i$ et $R_i$, $n_{i+1}$ devient $n_i$ et $R_{i+1}$ devient $R_i$

2. Procédé de construction d'images radar focalisées selon la revendication précédente, dans lequel chaque itération de l'étape de combinaison (204) des images comprend une étape de choix (244) entre une combinaison cohérente (241) et une étape de combinaison non cohérente (242).

3. Procédé de construction d'images radar focalisées selon la revendication précédente, **caractérisé en ce que** l'étape de combinaison cohérente (241) des images comprend au moins les sous-étapes suivantes :

   - recaler temporellement les images entre-elles (403) ;
   - modifier les images recalées pour les rendre superposables (404) ;
   - rabouter les signaux temporels correspondant à chacune des images superposables pour générer un nouveau signal (405),

- appliquer une transformée de Fourier selon l'axe temporel sur ledit nouveau signal pour générer au moins une image de résolution $R_i$ plus fine que $R_0$ (406).

4. Procédé de construction d'images radar focalisées selon la revendication précédente, une image de référence $IM_{ref}$ étant choisie parmi les $n_0$ images à combiner, **caractérisé en ce que** l'étape de recalage temporel des images entre-elles (403) comprend au moins les sous-étapes suivantes :

   o pour chacune des $n_0-1$ images $IM_x$ autres que l'image $IM_{ref}$ :

   - recaler en position les points réflecteurs de l'image $IM_x$ par rapport aux points réflecteurs de l'image de référence $IM_{ref}$ ;
   - recaler en phase l'image $IM_x$ par rapport à $IM_{ref}$.

5. Procédé de construction d'images radar focalisées selon la revendication 3, **caractérisé en ce que** l'étape de modification des images recalées pour les rendre superposables (404) comprend au moins les sous-étapes suivantes :

   o pour chacune des $n_0-1$ images $IM_x$ autres que l'image $IM_{ref}$ :

   - estimer le décalage résiduel de $IM_x$ par rapport à $IM_{ref}$ estimant la position du pic de corrélation entre ces deux images $IM_{ref}$ et $IM_x$ (441) ;
   - corriger l'image $IM_x$ (442) en y appliquant le décalage opposé de celui estimé à l'étape précédente (441).

6. Procédé de construction d'images radar focalisées selon l'une quelconque des revendications précédentes, une même zone géographique étant éclairée par le radar pendant toute la durée de l'éclairement, le procédé étant **caractérisé en ce que** les $n_0$ sous-périodes de découpage temporel se chevauchent sensiblement de moitié, les ensembles (311) étant choisis pour comprendre trois images de résolution $R_i$, la résolution $R_{i+1}$ de l'image générée à partir desdites trois images étant sensiblement deux fois plus fine que la résolution $R_i$.

7. Procédé de construction d'images radar focalisées selon l'une quelconque des revendications précédentes, **caractérisé en ce que** les traitements de combinaison sont parallélisés, des images de résolution $R_a$ regroupées dans un premier ensemble (311) sont combinées parallèlement à la combinaison d'images de résolution $R_b$, $R_b$ étant plus fine que $R_a$, regroupées dans un second ensemble (312), les images du premier ensemble (311) étant issues d'acquisitions radar effectuées sur une période disjointe des acquisitions radar effectuées pour produire les images du second ensemble (312).

8. Procédé de construction d'images radar focalisées selon la revendication 2, **caractérisé en ce que** l'étape de combinaison non cohérente (242) comprend au moins les étapes suivantes :

   - recaler temporellement les images entre elles (1103),
   - modifier les images recalées pour les rendre superposables (404),
   - mettre en conformité les images superposables dans un repère commun (1105),
   - sommer les images conformes pour les moyenner en puissance (1106).

**Patentansprüche**

1. Verfahren zum Erstellen von fokussierten Radarbildern, das wenigstens die folgenden Schritte beinhaltet:

   - Unterteilen der Beleuchtungsperiode des Radars in p Teilperioden, wobei sich zwei aufeinander folgende Teilperioden zeitlich überlappen (201);
   - Auswählen von $n_0$ aufeinander folgenden Teilperioden aus den p Teilperioden und Bewirken, für jede dieser $n_0$ Teilperioden, von Radarerfassungen zum Erzeugen eines Bildes IM_$0_x$ mit Auflösung $R_0$ (202);
   - Anwenden einer Autofokussierungsverarbeitung auf jedes der erzeugten $n_0$ Bilder IM_$0_x$ (203);
   - Kombinieren der verarbeiteten $n_0$ Bilder (204) durch Autofokussierung, um wenigstens ein neues fokussiertes Radarbild IM_$1_x$ zu erzeugen;
   - wobei das Verfahren **dadurch gekennzeichnet ist, dass** die Schritte des Kombinierens der Bilder (204) und des Autofokussierens (203) iterativ wiederholt werden, um ein Bild mit der gewünschten Auflösung $R_{fin}$ zu erhalten,

wobei no fokussierte Bilder am Ausgang einer Autofokussierungsverarbeitung (203) erzeugt werden, wobei das Verfahren eine iterative Phase beinhaltet, die wenigstens die folgenden Schritte beinhaltet:

- Initialisieren der Variablen $n_i$ und $R_i$ wie folgt: $n_i=n_0$ und $R_i=R_1$;
- so dass die Auflösung $R_i$ gröber ist als die gewünschte Auflösung $R_{fin}$:

  ○ Aufteilen der zuvor erzeugten $n_i$ Bilder mit Auflösung $R_i$ in $n_{i+1}$ Gruppen (311), wobei jede der Gruppen wenigstens zwei Bilder enthält, wobei die Bilder zeitlich aufeinander folgen;
  ○ für jede der $n_{i+1}$ Gruppen (311) von Bildern mit Auflösung $R_i$:

    • Kombinieren (241) der Bilder der Gruppe (311) zum Erzeugen eines neuen Bildes mit einer feineren Auflösung $R_{i+1}$;
    • Anwenden einer Autofokussierungsverarbeitung (203) auf das neue Bild mit der feineren Auflösung $R_{i+1}$;

  ○ Aktualisieren der Variablen $n_i$ und $R_i$, wobei $n_{i+1}$ zu $n_i$ wird und $R_{i+1}$ zu $R_i$ wird.

2. Verfahren zum Erstellen von fokussierten Radarbildern nach dem vorherigen Anspruch, wobei jede Iteration des Schritts (204) des Kombinierens von Bildern einen Schritt (244) des Auswählens zwischen einer kohärenten Kombination (241) und einem Schritt des nicht-kohärenten Kombinierens (242) beinhaltet.

3. Verfahren zum Erstellen von fokussierten Radarbildern nach dem vorherigen Anspruch, **dadurch gekennzeichnet, dass** der Schritt des kohärenten Kombinierens (241) von Bildern wenigstens die folgenden Teilschritte beinhaltet:

  - zeitliches Versetzen der Bilder voneinander (403);
  - Modifizieren der versetzten Bilder, um sie überlagerbar zu machen (404);
  - Zusammenfügen der zeitlichen Signale entsprechend jedem der überlagerbaren Bilder zum Erzeugen eines neuen Signals (405),
  - Anwenden einer Fourier-Transformation gemäß der Zeitachse auf das neue Signal, um wenigstens ein Bild mit einer Auflösung $R_1$ zu erzeugen (406), die feiner ist als $R_0$.

4. Verfahren zum Erstellen von fokussierten Radarbildern nach dem vorherigen Anspruch, wobei ein Referenzbild $IM_{ref}$ aus den zu kombinierenden $n_0$ Bildern ausgewählt wird, **dadurch gekennzeichnet, dass** der Schritt des zeitlichen Versetzens der Bilder voneinander (403) wenigstens die folgenden Teilschritte beinhaltet:

  ○ für jedes der anderen $n_0$-1 Bilder $IM_x$ als Bild $IM_{ref}$:

    - Versetzen der Positionen der Reflexionspunkte des Bildes $IM_x$ mit Bezug auf die Reflexionspunkte des Referenzbildes $IM_{ref}$;
    - Versetzen der Phase des Bildes $IM_x$ mit Bezug auf $IM_{ref}$.

5. Verfahren zum Erstellen von fokussierten Radarbildern nach Anspruch 3, **dadurch gekennzeichnet, dass** der Schritt des Modifizierens der versetzten Bilder, um sie überlagerbar zu machen (404), wenigstens die folgenden Teilschritte beinhaltet:

  ○ für jedes der anderen $n_0$-1 Bilder $IM_x$ als das Bild $IM_{ref}$:

    - Schätzen des Restversatzes von $IM_x$ mit Bezug auf $IM_{ref}$ durch Schätzen der Position des Korrelationspixels zwischen diesen beiden Bildern $IM_{ref}$ und $IM_x$ (441);
    - Korrigieren des Bildes $IM_x$ (442) durch Anwenden des Versatzes darauf, der dem im vorherigen Schritt (441) geschätzten entgegengesetzt ist.

6. Verfahren zum Erstellen von fokussierten Radarbildern nach einem der vorherigen Ansprüche, wobei eine selbe geografische Zone durch das Radar während der gesamten Beleuchtungsdauer beleuchet wird, wobei das Verfahren **dadurch gekennzeichnet ist, dass** die $n_0$ Teilperioden des zeitlichen Unterteilens einander im Wesentlichen halb überlappen, wobei die Gruppen (311) so gewählt werden, dass sie drei Bilder mit Auflösung $R_i$ umfassen, wobei die Auflösung $R_{i+1}$ des auf der Basis der drei Bilder erzeugten Bildes im Wesentlichen zweimal feiner sind als die Auflösung $R_i$.

**7.** Verfahren zum Konstruieren von fokussierten Radarbildern nach einem der vorherigen Ansprüche, **dadurch gekennzeichnet, dass** die Kombinationsverarbeitungen parallel sind, die in einer ersten Gruppe (311) gruppierten Bilder mit Auflösung $R_a$ parallel zu der Kombination von Bildern mit Auflösung $R_b$ kombiniert werden, wobei $R_b$ feiner ist als $R_a$, gruppiert in einer zweiten Gruppe (312), wobei die Bilder der ersten Gruppe (311) von Radarerfassungen kommen, die in einer Periode durchgeführt werden, die von Radarerfassungen getrennt ist, die zum Erzeugen der Bilder der zweiten Gruppe (312) durchgeführt wurden.

**8.** Verfahren zum Erstellen von fokussierten Radarbildern nach Anspruch 2, **dadurch gekennzeichnet, dass** der Schritt des nicht-kohärenten Kombinierens (242) wenigstens die folgenden Schritte beinhaltet:

- zeitliches Versetzen der Bilder voneinander (1103),
- Modifizieren der versetzten Bilder, um sie überlagerbar (404) zu machen,
- Ineinklangbringen der überlagerbaren Bilder in einem gemeinsamen Bezugspunkt (1105),
- Summieren der konformen Bilder, um sie in Bezug auf Leistung zu mitteln (1106).

**Claims**

**1.** Method for constructing focused radar images comprising at least the following steps:

- dividing the illumination period of the radar into p sub-periods, two successive sub-periods temporally overlapping (201);
- selecting $n_0$ successive sub-periods from the p sub-periods and, for each of these $n_0$ sub-periods, carrying out radar acquisitions in order to generate an image $IM\_0_x$ having a resolution $R_0$ (202);
- applying an autofocus processing operation to each of the $n_0$ images $1M\_0_x$ generated (203);
- combining the $n_0$ images (204) which have been processed by means of autofocus in order to generate at least one new focused radar image $IM\_1_x$,
- the method being **characterised in that** the steps of combining the images (204) and autofocus (203) are repeated in an iterative manner in order to obtain an image having the desired resolution $R_{fin}$,
$n_0$ focused images being generated following an autofocus processing operation (203), the method comprises an iterative phase which comprises at least the following steps:
- initialising the variables $n_i$ and $R_i$ as follows: $n_i = n_o$ and $R_i = R_1$;
- as long as the resolution $R_i$ is coarser than the resolution $R_{fin}$ desired:
- distributing the $n_i$ images having resolution $R_i$ generated previously into $n_{i+1}$ groups (311), each of the groups containing at least two images, the images being successive in time;
- for each of the $n_{i+1}$ groups (311) of images having resolution $R_i$:
- combining (241) the images of the group (311) in order to generate a new image having a finer resolution $R_{i+1}$;
- applying an autofocus processing operation (203) to the new image having a finer resolution $R_{i+1}$;
- updating the variables $n_i$ and $R_i$, $n_{i+1}$ becomes $n_i$ and $R_{i+1}$ becomes $R_i$.

**2.** Method for constructing focused radar images according to the preceding claim, wherein each iteration of the step (204) of combining the images comprises a step (244) for selecting between a coherent combination step (241) and a non-coherent combination step (242).

**3.** Method for constructing focused radar images according to the preceding claim, **characterised in that** the coherent combination step (241) of the images comprises at least the following sub-steps:

- mutually temporally aligning the images (403);
- modifying the aligned images so that they can be superimposed (404);
- joining the time signals corresponding to each of the images which can be superimposed in order to generate a new signal (405),
- applying a Fourier transformation along the time axis to the new signal in order to generate at least one image having the resolution $R_1$ which is finer than $R_0$ (406).

**4.** Method for constructing focused radar images according to the preceding claim, a reference image $IM_{ref}$ being selected from the $n_0$ images to be combined, **characterised in that** the step of mutual temporal alignment of the images (403) comprises at least the following sub-steps:

• for each of the $n_0$-1 images $IM_x$ other than the image $IM_{ref}$:
• aligning the position of the reflective locations of the image $IM_x$ relative to the reflective locations of the reference image $IM_{ref}$;
• aligning in terms of phase the image $IM_x$ relative to the $IM_{ref}$.

5.  Method for constructing focused radar images according to claim 3, **characterised in that** the step (404) of modification of the aligned images in order to enable them to be superimposed comprises at least the following sub-steps:

   • for each of the $n_0$-1 images $IM_x$ other than the image $IM_{ref}$:
   • estimating the residual displacement of IMx relative to $IM_{ref}$ estimating the position of the correlation peak between these two images $IM_{ref}$ and $IM_x$ (441);
   • correcting the image IMx (442) by applying thereto the displacement opposite to the displacement estimated in the preceding step (441).

6.  Method for constructing focused radar images according to any one of the preceding claims, a same geographic zone being illuminated by the radar for the entire duration of the illumination, the method being **characterised in that** the $n_0$ sub-periods of time division overlap by substantially one half, the groups (311) being selected to comprise three images having a resolution $R_i$, the resolution $R_{i+1}$ of the image generated from these three images being substantially twice as fine as the resolution $R_i$.

7.  Method for constructing focused radar images according to any one of the preceding claims, **characterised in that** the combination processing operations are parallelised, images having resolution $R_a$ grouped in a first group (311) are combined in parallel with the combination of images having resolution $R_b$, $R_b$ being finer than $R_a$, grouped in a second group (312), the images of the first group (311) originating from radar acquisitions which are carried out over a non-contiguous period of the radar acquisitions carried out in order to produce the images of the second group (312).

8.  Method for constructing focused radar images according to claim 2, **characterised in that** the step (242) of non-coherent combination comprises at least the following steps:

   • mutually temporally aligning the images (1103),
   • modifying the aligned images so that they can be superimposed (404),
   • bringing the images which can be superimposed into conformance in a common reference system (1105),
   • summing the conforming images in order to average them in terms of power (1106).

FIG.1

201

202

203

204

# FIG.2

201

202

203

204

243

241a 241

241b

205

# FIG.2a

201

202

203

204

242a

242b     242

205

## FIG.2b

201

202

203

204

244

243

241a

242a

241b     241

242     242b

205

## FIG.2c

FIG.3

FIG.4

FIG.5

FIG.6

FIG.7a

FIG.7b

FIG.7c

FIG.8

FIG.9

FIG.10

EP 2 388 617 B1

FIG.11

**EP 2 388 617 B1**

## RÉFÉRENCES CITÉES DANS LA DESCRIPTION

**Documents brevets cités dans la description**

- US 6255981 B